Europäisches Patentamt

(19) European Patent Office

Office européen des brevets

(11) Publication number: **0 267 338**
**B1**

# (12) EUROPEAN PATENT SPECIFICATION

(45) Date of publication of the patent specification:
03.10.90

(21) Application number: 86308914.0

(22) Date of filing: 14.11.86

(51) Int. Cl.⁵: **F28D 7/12**, F28F 1/00,
F28F 13/18, C02F 11/08,
E21B 36/00

(54) Heat exchanger for fluid treatment apparatus.

(43) Date of publication of application:
18.05.88 Bulletin 88/20

(45) Publication of the grant of the patent:
03.10.90 Bulletin 90/40

(84) Designated Contracting States:
AT DE FR GB SE

(56) References cited:
DE-A- 3 420 937
US-A- 3 680 631
US-A- 3 763 935
US-A- 3 861 461
US-A- 4 272 383

(73) Proprietor: VerTech Treatment Systems, Inc.,
12000 Pecos Street 3rd Floor, Denver
Colorado 80234(US)

(72) Inventor: Rappe, Gerald Cory, 2770 Northbrook Place,
Boulder Colorado 80302(US)

(74) Representative: Ranson, Arthur Terence et al, W.P.
Thompson & Co. Coopers Building Church Street,
Liverpool L1 3AB(GB)

## Description

The present invention relates to insulated conduits in heat transfer device for heat exchangers and their use in continuous fluid treatment apparatus, such as may be used in down-hole wet oxidation of fluid waste streams, including municipal sludge.

Above ground wet oxidation systems have been in use for several years with limited success for the treatment of municipal sludge received from a sewage treatment process. The above-ground wet oxidation systems use high surface pressure and heat to initiate the wet oxidation reaction, however, the apparatus is not energy efficient, the system is subject to failure and results in only partial oxidation of the sludge, see for example, US-A 2 665 249 and US-A 2 932 613. The above ground wet oxidation processes have not therefore replaced the traditional methods of treating municipal sludge, which includes settling, dewatering, drying, incineration and the like.

Various vertical or down-hole fluid treatment systems have been proposed by the prior art but are used only in very limited applications. A down hole fluid treatment system utilizes vertical conduits which generally extend downwardly into the ground from a control station. The fluid to be treated is pumped into the vertical reactor conduits and the fluid head creates a pressure which assists in the desired fluid process or reaction. In the processes used to date, the reaction requires additional heat which may be added by electrical resistance coils or heated fluid which circulates in a heat exchanger. Air or other gases may be added to the fluid being treated to assist in the reaction.

Although several prior art patents propose a vertical well wet oxidation reaction system for treatment of municipal sludge or other fluid waste streams, the processes and apparatus disclosed in these patents have not been successful; see, for example, US-A 3 449 247. As recognized by these prior art patents, the pressure created by the fluid head is dependent upon the length of the reactor. Thus, it is theoretically possible to fully oxide municipal sludge at a depth of approximately one mile (1.6 km) provided the concentration of the oxidizable material in the municipal sludge is balanced against the oxygen available in the air injected into the system. To the present applicant's knowledge, however, no one has heretobefore been successful in building a down-hole wet oxidation system for municipal sludge.

US-A 4 272 383, entitled "Method and Apparatus for Effecting Subsurface, controlled, Accelerated Chemical Reactions", discloses the principles of the first successful down-hole wet oxidation reaction system for municipal sludge which is now operating on an experimental basis in Longmont, Colorado, United States of America. The apparatus disclosed in the aforementioned patent includes a series of generally concentric telescopically nested pipes or tubes wherein diluted municipal sludge is preferably received in the inner pipe and flows downwardly to a reaction zone adjacent the bottom of the pipe and recirculated upwardly through a second pipe, which surrounds the inner pipe, following the reaction. Compressed air is injected into the downwardly flowing sludge preferably in the form of Taylor-type gas bubbles. In US-A 4 272 383 the temperature of the reaction is controlled by a heat exchanger jacket which surrounds the inner concentric pipes wherein heated oil or other heat exchange fluid is pumped into the jacket to control the temperature of the reaction zone.

The fluid treatment apparatus of the present invention preferably utilizes a centrally located heat transfer device wherein the fluid to be treated is contained within recirculating conduits which surround the heat transfer device, resulting in better control of the temperature of the reaction zone and more efficient heating of the fluid to be treated. The centre downcomer pipe of the heat transfer device is an insulated conduit which may, in turn, comprise two concentric conduits telescopically nested in spaced relation wherein the space between these concentric conduits is sealed and filled with an inert gas. As will be understood, the conduits used in the fluid treatment apparatus of this invention can comprise a series of conduits interconnected in a vertical string to accommodate the length of the overall fluid treatment apparatus. Insulated conduits have been used in the oil well industry and other industries for several years to transfer heated fluids and gases. As set forth hereinbelow, however, the fluid treatment apparatus of this invention requires localizing the heat as much as possible in the reaction zone located adjacent the bottom of the conduits. The heated oil or other heat transfer fluid is received at the top of the apparatus or ground level. Thus, radial heat losses through the insulated conduit to the recirculated heat transfer fluid must be minimized. It has now been found that a substantial heat loss results from atomic hydrogen permeation into the space between the concentric conduits of the insulated conduits which recombines to form gaseous hydrogen. There is therefore a need to develop an improved insulated conduit which inhibits hydrogen permeation to improve the insulation qualities of the insulated conduit which results in an improved heat transfer device, heat exchanger and fluid treatment apparatus of the type disclosed herein.

According to the present invention, there is provided an elongated heat transfer device for use in a heat exchanger, which comprises a first elongated insulated conduit having an open end, telescopically nested in and surrounded by a second conduit having a closed end adjacent said open end of said first insulated conduit and communicating therewith, said first insulated conduit comprising an inner metal conduit and an outer metal conduit surrounding said inner tube in spaced relation, the space between said inner and outer conduits tubes being sealed and filled with an inert gas, the first conduit being adapted to convey a hot heat transfer fluid which is received in one end of said first insulated conduit and which flows through said first insulated conduit, said heat transfer fluid being cooled and returned through said second conduit for heating and recirculation, characterised in that there is a hydrogen permeation barrier on the inner and outer surfaces of said inner and outer conduits of said first insulated conduit, said hydrogen permeation barrier comprising a metal coating selected from aluminium, nickel and copper.

According to another aspect of the present invention there is provided an elongated heat exchanger which comprises the heat transfer device of the present invention, together with a third conduit surrounding said second conduit in spaced relation, having an opening at its lower end, and a fourth conduit surrounding said third conduit in spaced relation having a closed lower end and communicating with said third conduit in spaced relation.

The present invention also provides for the use of the heat exchanger for a fluid treatment process which comprises continuous chemical reaction.

The heat transfer device and heat exchanger of the present invention are particularly, although not exclusively, adapted to utilization in a fluid treatment apparatus for continuous treatment of fluid waste at elevated temperatures and pressures, such as down-hole fluid treatment apparatus including wet oxidation of municipal sludge and other fluid wastes. The preferred heat exchanger includes a first elongated insulated conduit preferably having an open end which is generally concentric with and telescopically nested in a second conduit preferably having a closed end adjacent the open end of the surrounding conduit to communicate with the first insulated conduit. The first insulated conduit includes an inner conduit and an outer conduit which is preferably generally concentric with and surrounds the inner conduit in spaced relation. The space between the inner and outer conduits is preferably sealed and filled with an inert gas, such as, for example, argon, helium or zenon. The heat transfer fluid such as, for example oil is received in the inner portion of the first insulated conduit preferably at an elevated temperature. The heat transfer fluid then flows through the first insulated conduit and returns through the annular space formed between the outer conduit of the first insulated conduit and the inner surface of the conduit which constitutes one boundary of the downcoming fluid and oxidizing gas, for heating and recirculation.

The first insulated conduit includes a hydrogen permeation barrier on the inner and outer surfaces of both inner and outer conduits of the first insulated tubular conduit. The hydrogen permeation barrier is preferably formed by coating the inner and outer surfaces of both inner and outer conduits with aluminium, nickel or copper. The permeation barrier reduces the flow of atomic hydrogen into the space between the inner and outer conduits of the first insulated conduit, thereby reducing heat losses from the hot transfer fluid in the inner portion or central space of the first insulated conduit to the returning heat transfer fluid in the annular region whose inner surface is the outer surface of the first insulated conduit. When the heat transfer device of the present invention is submerged in a fluid, the heat transfer is concentrated in a reaction zone located adjacent the end of the heat transfer device, which is particularly advantageous in the down-hole fluid treatment apparatus of the present invention. The elongated fluid heat transfer device is then surrounded by circulation conduits containing the fluid to be treated. The circulation conduits include a first conduit which telescopically surrounds the outer conduit of the heat transfer device in spaced relation which receives the fluid to be treated in contact with the outer conduit of the heat transfer device. A second conduit of the circulation conduits generally concentric with and surrounding the first conduit of the circulation conduits receives the treated fluid. The fluid to be treated, such as municipal sludge or other fluid waste is received between the outer conduit of the heat transfer device and the first conduit of the fluid circulation conduits. The fluid to be treated flows through the first conduit of the circulation paper in contact with the heat transfer device and recirculates through the second conduit of the circulation conduits. In this embodiment, the fluid treatment apparatus thus creates a fluid reaction zone adjacent the end of the fluid circulation conduits.

The hydrogen diffusion barrier is a diffusion coating of aluminium on the inner and outer surfaces of the concentric conduits of the first insulated conduit, forming a surface "coating" of an iron-aluminium alloy. The iron-aluminium alloy coating has been found to be particularly effective in preventing diffusion of atomic hydrogen into the sealed space between the conduits. The diffusion barrier may also be formed by electroplating copper or preferably nickel on the surfaces of the tubes. As described, the diffusion of atomic hydrogen into the sealed space between the conduits of the first insulated conduit results in an increased thermal conductivity and resultant increased radial heat losses from the heat transfer fluid flowing through the first insulated conduit to the recirculating heat transfer fluid in the second outer conduit of the heat transfer device.

In a preferred method of forming the first insulated conduit of the present invention, the hydrogen permeation barrier coating is formed by diffusion coating the interior and exterior surfaces of the conduits with aluminium, forming an iron-aluminium alloy on the surfaces. The hydrogen permeation barrier may also be formed by electroplating the surfaces with nickel or the barrier may also be formed by electroplating copper on the surfaces.

By way of example only, a specific embodiment of the present invention will now be described, with reference to the accompanying drawings, in which:

Fig. 1 is a schematic illustration of a preferred embodiment of the continuous fluid treatment apparatus of this invention; and

Fig. 2 is a cross-sectional view of the lower portion of the fluid treatment apparatus shown in Fig. 1.

The continuous fluid treatment apparatus 20 illustrated in the drawings is a vertical down hole fluid reaction apparatus suitable for treatment of various contaminated fluid wastes including wet oxidation treatment of municipal sludge. As disclosed in the above-referenced US-A 4 272 383, the fluid treatment apparatus comprises a plurality of generally concentric and telescopically nested conduits which extend vertically into the ground. In a treatment apparatus for wet oxidation of municipal sludge, for example, the conduits may extend approximately one mile (1.6 km) into the ground creating a very substantial pressure head. It will be understood, however, that the length of the conduits will depend upon the fluid being treated and the desired fluid reaction. The fluid treatment apparatus used in the present invention may also be used in various conversion reactions wherein a solid particulate is suspended in the circulating fluid. Further, the conduits are generally not continuous. Each conduit comprises a plurality of sections which are interconnected in serial alignment in a string, similar to the conduits in an oil well. In a typical municipal sludge wet oxidation application, the length of each conduit section is 40 feet (12.2 m) long, the total length is about 5,200 feet (1585 m) and the flow rate of the fluid being treated is about 80 to 400 gallons (364 to 1818 litres) per minute.

In the disclosed preferred embodiment of the use of the fluid treatment apparatus in the present invention, the fluid heat transfer device 22 is located at the centre of concentric conduits of the fluid treatment apparatus. The first or innermost conduit of the heat transfer device is an insulated conduit 24 having an open end 26. As described more fully hereinbelow, this first insulated conduit reduces radial heat transfer from the downflowing heated heat transfer fluid in the insulated conduit to the recirculating upwardly flowing heat transfer fluid within a second conduit 28. As shown, the first insulated conduit 24 is generally concentric with and telescopically nested in the second conduit 28 and the second conduit has a closed end 30 adjacent the open end 26 of the first insulated conduit 24. The fluid to be treated is then circulated around the heat transfer device 22, as now described.

A third conduit 32 (which is the first conduit of the outer fluid circulation conduits) surrounds the heat transfer device 22 in generally concentric spaced telescopic relation. The third conduit 32 has an open end 34 adjacent the closed end 30 of the heat transfer device. A fourth conduit 36 surrounds the third conduit 32 in generally concentric spaced telescopic relation and includes a closed end 38 adjacent the open end 34 of the third conduit 32. The fluid to be treated is circulated downwardly through conduit 32 in contact with the second conduit 28 of the heat transfer device 22 and the treated fluid then flows through the open end 34 of the third conduit 32 and upwardly through the fourth conduit 36 in contact with the outer surface of the third conduits 32. As described in the above-referenced US-A 4 272 383, the fluid treatment apparatus creates a reaction zone adjacent the bottom of the apparatus wherein the fluid to be treated is reacted under heat and pressure. A principal desire of the present invention is to concentrate the heat transferred from the heat transfer device to the fluid circulating in conduit 32 to the lower reaction zone, for example, the lower third of conduit 32, and reduce radial heat transfer, particularly in the upper portion of the heat transfer apparatus.

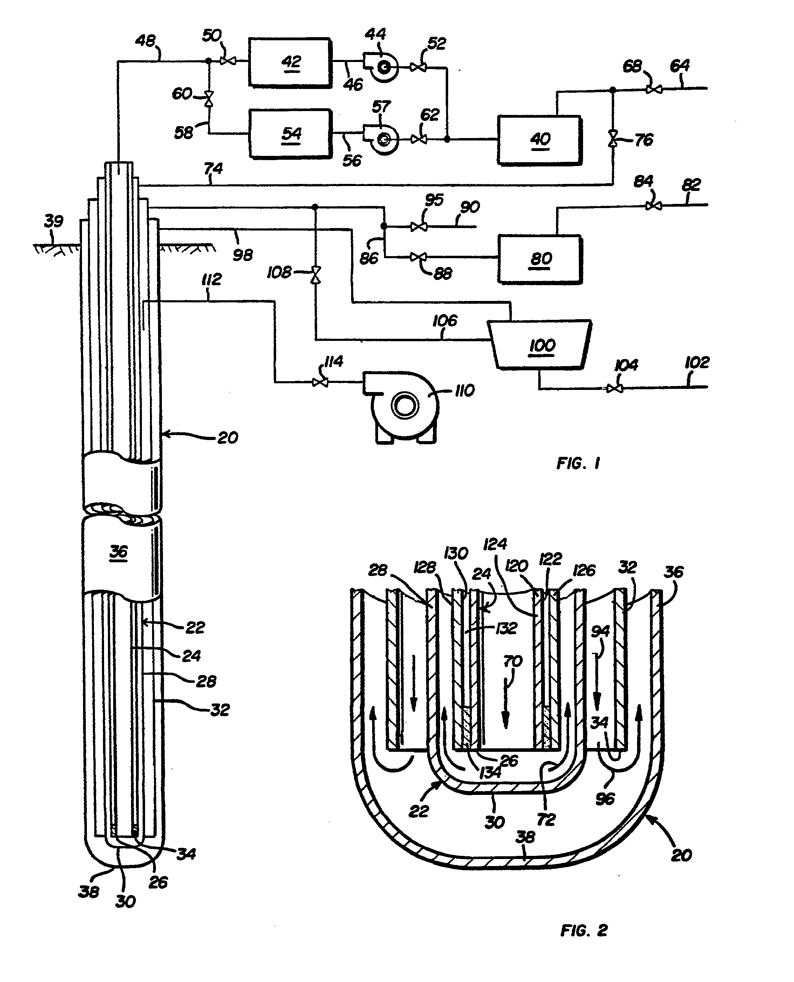

Fig. 1 illustrates schematically the above-ground components utilized in the fluid treatment apparatus and process. The heat transfer fluid, such as oil, is stored in a reservoir tank 40. The oil is heated in a heater 42, such as a conventional gas fired heater. The oil is pumped by pump 44 from reservoir 40 through line 46 to heater 42 and the rate of flow is controlled by valve 52. The heated oil is then transferred through line 48 and the rate of flow is controlled by valve 50. Where the fluid reaction is exothermic, such as a wet oxidation reaction, cooling of the reaction zone may be required where the heat of reaction exceeds the preferred temperature in the reaction zone. Thus, the disclosed apparatus includes a heat exchanger 54 where the oil may be cooled. The oil from reservoir 40 may be pumped through line 56 to the heat exchanger 54 by pump 57. The flow is controlled by valve 62. The cooler oil is then discharged through line 58 and valve 60 to the supply line 48 of the fluid treatment apparatus.

Normally heated oil is then supplied through line 48 into the top of the first insulated conduit 24. As best shown in Fig. 2, the heated oil then flows downwardly through the first insulated conduit as shown by arrows 70. The oil then flows out of the open end 26 of the first insulated conduit and the oil is recirculated upwardly through second conduit 28, in contact with the first conduit 24, as shown by arrow 72. The oil or other heat transfer fluid is then discharged from the top of conduit 28 through line 74, back to reservoir 40 through valve 76.

The fluid to be treated, such as contaminated industrial fluids, municipal sewage or the like is supplied to the top of third conduit 32 and circulates around the heat transfer device 22 as described. As shown in Fig. 1, the fluid to be treated is stored in reservoir tank 80. As described in the above-referenced US-A 4 272 383, the fluid treatment apparatus is particularly suitable for treatment of municipal sludge received from a conventional municipal wastewater treatment plant. The sludge is received through line 82 and the flow is controlled by valve 84. The fluid sludge is then delivered to the apparatus through line 86 and valve 88. The fluid sludge is preferably diluted with liquid effluent from municipal wastewater treatment plant delivered through line 90 and valve 95. The fluid sludge is preferably diluted to control the percentage of oxidizable material delivered to the fluid treatment apparatus. The diluted fluid sludge fluid waste or other fluid to be treated then flows downwardly through third conduit 32 in contact with the outer wall of conduit 28 of the heat transfer device 22 as shown by arrows 94. As described, conduit 32 has an open end 34 and the treated fluid then flows upwardly through the fourth conduit 36 for discharge from the fluid treatment apparatus. As shown in Fig. 1, the treated fluid is discharged from conduit 36 through line 98 to tank 100. Where the apparatus is used for wet oxidation of fluid sludge, tank 100 is preferably a settling tank where the substantially inert ash is separated from the water. The ash may be drawn off through line 102 and the rate of flow is controlled by valve 104.

In a wet oxidation reactor, the supernatant may be drawn off through line 106 and used as a diluent in the process. As shown in Fig. 1, the supernatant is drawn off through line 106 and delivered to line 86 which communicates with conduit 32. The rate of flow and dilution is controlled by valve 108. As described in the above-reference US-A 4 272 382, air is injected into the down-flowing sludge in wet oxidation of municipal sludge and other waste materials. The air is preferably injected into the down-flowing stream of the fluid to be treated below the ground level 39 in the form of Taylor-type bubbles. It will also be understood that other fluid reactions may require other gases dependent upon the desired reaction. The disclosed apparatus therefore includes an air compressor 110 and the compressed air is delivered to the downward flowing fluid to be treated in conduit 32 below ground level by line 112 and the flow is controlled by valve 114. Item 110 may also be a pump delivering any gas required by the reaction occurring in the fluid treatment apparatus used in the present invention.

As described, the fluid treatment apparatus of this invention is primarily intended to treat fluid waste at elevated temperatures and pressures. The pressure is provided by the fluid head and the temperature is provided by the heat of reaction, where the reaction is exothermic, and, by the heat transfer device 22. In a typical wet oxidation reaction of municipal sludge, the bottom hole temperature is approximately 500 degrees Fahrenheit (260°C). Thus, the oil delivered to the second or outer conduit 28 of the heat transfer device should be in excess of 500 degrees Fahrenheit (260°C). In a typical wet oxidation reaction, the oil will be delivered to the inlet of the insulated conduit 24 at a temperature of about 700 degrees Fahrenheit (371°C). The oil or other heat transfer fluid then flows downwardly to the open end 26 of the insulated conduit 24, where it is delivered to the second or outer conduit 28 of the heat exchanger at a temperature of about 525 to 550 degrees Fahrenheit (274 to 288°C). The fluid then flows upwardly through conduit 28 as shown by arrow 72 of Fig. 2 and heats the down-flowing fluid to be treated which contacts the outer surface of conduit 28 as it flows down conduit 32. The temperature of the oil at the top exit of the conduit 28 is about 150 degrees Fahrenheit (65.5°C). As described, the fluid reaction occurs in a reaction zone where temperature of the down-flowing fluid exceeds 350 degrees Fahrenheit (177°C). The preferred embodiment of the fluid treatment apparatus therefore utilizes an insulated conduit 24 to reduce the radial heat transfer from the down-flowing heat transfer fluid in the insulated conduit 24 to the cooler heat transfer fluid in conduit 28.

The details of the insulated conduit 24 are disclosed in Fig. 2. The insulated conduit 24 includes an inner conduit 120 having outer and inner surfaces 122 and 124, respectively, and an outer conduit 126 having outer and inner surfaces 128 and 130, respectively. The inner conduit 120 is preferably concentric with and telescopically nested within the outer conduit 126 in spaced relation. The space 132 between the conduit is fixed and sealed with a sealing ring 134 which may be welded or otherwise secured in the space between the conduits. The space between the conduits is then evacuated and filled with an inert gas such as argon, helium and zenon. The inert gas has a low thermal conductivity, reducing the radial heat transfer through the space 132 between the tubes 120 and 126.

The heat transfer across the space 132 between the tubes is defined by the following equation:

$$Q = kA \, \Delta t/\Delta r$$

wherein Q is the heat transferred in btu per hour (Joules per hour), k is the thermal conductivity, A is the area for heat transfer, $\Delta t/\Delta r$ is the radical temperature gradient. In the wet oxidation apparatus operating experimentally at Longmont, Colorado, the inner tube 120 has an inside diameter of two inches (5.08 cm) and an outside diameter of 2–3/8 inches (6.0325 cm). The outer tube 126 has an inside diameter of three inches (7.62 cm) and an outside diameter of 3 1/2 inches (8.89 cm). Thus $\Delta r$ is 5/8 inch (1.5875 cm). In the example above, $\Delta t$ at the top of the heat exchanger is 550 degrees Fahrenheit (305.6°C) (700 degrees F. – 150 degrees F.) (371.1 – 65.5°C). Thus, the temperature gradient is substantial and substantial radial heat transfer will occur in the upper portion of the fluid treatment apparatus unless the inner conduit 24 is well insulated.

The use of an insulated conduit 24 has resulted in a substantial decrease in radial heat losses, however, the insulating qualities have decreased with time. It has now been discovered that the reduction in the insulating qualities of the insulated conduit 24 is due at least in part to the permeation of atomic hydrogen through the walls of the insulated conduit 24 into the space 132 between the conduits 120 and 126. Atomic hydrogen is able to permeate the interstices of the metal conduits 120 and 126 into the space 132 between the conduits. The atomic hydrogen then combines to form hydrogen gas which cannot escape through the walls. The hydrogen gas then accumulates in the space 132 between the conduits, increasing the thermal conductivity of the gas. As described above, the space between the walls is filled with an inert gas. The insulated conduit 24 of this invention therefore includes a hydrogen permeation barrier which reduces the flow of atomic hydrogen into the space between the conduit.

The most preferred hydrogen permeation barrier comprises a diffusion coating of aluminium on the inner and outer surfaces (124, 126, 128 and 130) of both inner and outer conduits 120 and 126. The conduits are preferably formed of steel, such that the diffusion coating is an iron-aluminium alloy. Aluminium diffusion coatings are commonly applied to steel furnace tubes and the like to improve corrosion resistance and furnace life by a process known as "Alonizing". In the Alonizing process, the pipe is packed externally and internally with aluminium and alumina powder and place in a furnace at about 1700 degrees Fahrenheit (927°C) for the three to four days. The coating is very hard and does not interfere with welding. It has now been discovered that an Alonized aluminium-iron diffusion coating substantially reduces atomic hydrogen diffusion.

The hydrogen diffusion barrier coating may also be formed by electroplating nickel on the interior and exterior surfaces of the conduits. The electroplated nickel coating also provides an excellent atomic hydrogen diffusion barrier, not quite as good as the Alonized surfaces. Finally, the hydrogen diffusion barrier may be formed by electroplating copper on the surfaces of the conduits. However, copper will interfere with welding and may adversely affect the strength properties of the tubes. Where the surface is electroplated with nickel or copper, the thickness of the coating should be approximately 0.001 mm. Comparing bare steel with a hydrogen permeation barrier coated insulated conduit, the coated insulated conduit had a hydrogen permeation rate reduced by a factor of about 1000. Comparing Alonized steel with a nickel plated steel, the permeation rate was reduced by a factor of about 10. Thus, the most preferred embodiment includes a hydrogen diffusion barrier formed by diffusion coating of aluminium, forming an ironaluminium alloy. The hydrogen diffusion barrier substantially reduces degradation of the insulating qualities of the insulated conduit.

## Claims

1. An elongated heat transfer device for use in a heat exchanger, which comprises a first elongated insulated conduit (24) having an open end (26), telescopically nested in and surrounded by a second conduit (28) having a closed end (30) adjacent said open end (26) of said first insulated conduit (24) and communicating therewith, said first insulated conduit (24) comprising an inner metal conduit (120) and an outer metal conduit (126) surrounding said inner tube (120) in spaced relation, the space (132) between said inner and outer conduits tubes being sealed and filled with an inert gas, the first conduit (24) being adapted to convey a hot heat transfer fluid which is received in one end of said first insulated conduit (24) and which flows through said first insulated conduit, said heat transfer fluid been cooled and returned through said second conduit (28) for heating and recirculation, characterised in that there is a hydrogen permeation barrier on the inner and outer surfaces (124, 122, 130, 128) of said inner (120) and outer (126) conduits of said first insulated conduit (24), said hydrogen permeation barrier comprising a metal coating selected from aluminium, nickel and copper.

2. A heat transfer device according to claim 1, wherein the outer conduit (126) is generally concentric with the inner conduit (120), and the second conduit (28) is generally concentric with the first conduit (24).

3. A heat transfer device according to claim 2, wherein said inner (120) and outer (126) conduits of said first insulated conduit (24) comprise steel and said hydrogen diffusion barrier comprises a diffusion coating of aluminium of said inner (124, 122, 130, 128) and outer surfaces, forming an iron-aluminium alloy.

4. A heat transfer device according to claim 2 wherein said hydrogen diffusion barrier comprises an electroplated coating selected from nickel and copper.

5. An elongated heat exchanger, comprising a heat transfer device according to any of claims 1 to 4, together with a third conduit (32) surrounding said second conduit (28) in spaced relation, having an opening (34) at its lower end, and a fourth conduit (36) surrounding said third conduit (32) in spaced relation having a closed lower end (38) and communicating with said third conduit (32) in spaced relation.

6. Use of a heat exchanger according to claim 5 for a fluid treatment process which comprises continuous chemical reaction.

## Patentansprüche

1. Langgestrecktes Wärmeübertragungsgerät zur Verwendung in einem Wärmetauscher, mit einer ein offenes Ende (26) aufweisenden ersten langgestreckten isolierten Leitung (24), die teleskopisch in eine zweite Leitung (28) eingesetzt ist und von dieser umgeben wird, die ein geschlossenes Ende (30) benachbart zu dem offenen Ende (26) der ersten isolierten Leitung (24) aufweist, das mit diesem in Verbindung steht, wobei die erste isolierte Leitung (24) eine innere metallische Leitung (120) und eine das innere Rohr (120) beabstandet umgebende äußere metallische Leitung (126) aufweist, der Raum (132) zwischen den inneren und äußeren Leitungsrohren abgedichtet und mit einem in Inert-Gas gefüllt ist, die erste Leitung (24) zur Förderung eines heißen Wärmeübertragungsfluids ausgebildet ist, das in einem Ende der ersten isolierten Leitung (24) aufgenommen wird und durch die erste isolierte Leitung fließt, und das Wärmeübertragungsfluid gekühlt und durch die zweite Leitung (28) zur Aufheizung und Rezirkulation zurückgeführt wird, dadurch gekennzeichnet, daß es auf den inneren und äußeren Oberflächen (124, 122, 130, 128) der inneren (120) und äußeren (126) Leitung der ersten isolierten Leitung (24) eine Hydrogen-Permeationsbarriere gibt, die eine Beschichtung aus Metall enthält, das aus Aluminium, Nickel und Kupfer ausgewählt ist.

2. Wärmeübertragungsgerät nach Anspruch 1, bei dem die äußere Leitung (126) etwa konzentrisch bezüglich der inneren Leitung (120) und die zweite Leitung (28) etwa konzentrisch zu der ersten Leitung (24) ist.

3. Wärmeübertragungsgerät nach Anspruch 2, worin die inneren (120) und äußeren (126) Leitungen der ersten isolierten Leitung (24) Stahl umfassen und die Hydrogen-Diffusionsbarriere eine Diffusionsbeschichtung aus Aluminium der inneren (124, 122, 130, 128) und äußeren Oberfläche umfaßt und eine Eisen-Aluminiumlegierung bildet.

4. Wärmeübertragungsgerät nach Anspruch 2, bei dem die Hydrogen-Diffusionsbarriere eine galvanische Beschichtung aufweist, die von Nickel und Kupfer ausgewählt ist.

5. Langgestreckter Wärmetauscher, mit einem Wärmeübertragungsgerät nach einem der Ansprüche 1–4, zusammen mit einer dritten Leitung (32), die die zweite Leitung (28) beabstandet umgibt und eine Öffnung (34) an ihrem unteren Ende aufweist, sowie mit einer vierten Leitung (36), die die dritte Leitung (32) beabstandet umgibt und ein geschlossenes unteres Ende (38) aufweist und mit der dritten Leitung (32) beabstandet in Verbindung steht.

6. Verwendung eines Wärmetauschers nach Anspruch 5, für ein Fluidbehandlungsverfahren, das eine kontinuierliche chemische Reaktion umfaßt.

## Revendications

1. Appareil allongé de transfert de la chaleur, pour utilisation dans un échangeur de chaleur, comprenant un premier conduit isolé (24) allongé, présentant une extrémité (26) ouverte, emboîté télescopiquement dans un second conduit (28) qui l'entoure et qui présente une extrémité (30) fermée adjacente à ladite extrémité (26) ouverte dudit premier conduit isolé (24) et qui communique avec lui, ledit premier conduit isolé (24) comprenant un conduit métallique (120) intérieur et un conduit métallique (126) extérieur entourant ledit tube intérieur (120) en étant espacé de lui, l'espace (132) existant entre lesdits tubes de conduits intérieur et extérieur étant fermé de manière étanche et rempli d'un gaz inerte, le premier conduit (24) étant adapté pour véhiculer un fluide de transfert de chaleur chaud qui est reçu à une extrémité dudit premier conduit isolé (24) et qui s'écoule à travers ledit premier conduit isolé, ledit fluide de transfert de chaleur étant refroidi et ramené par ledit second conduit (28) afin de subir un chauffage et une recirculation, caractérisé par le fait qu'il y a, sur les surfaces intérieures et extérieures (124, 122, 130, 128) desdits conduits intérieur (120) et extérieur (126) dudit premier conduit isolé (24), une barrière perméable à l'hydrogène qui comprend un revêtement métallique sélectionné parmi l'aluminium, le nickel et le cuivre.

2. Appareil de transfert de la chaleur selon la revendication 1, dans lequel le conduit extérieur (126) est de façon générale concentrique au conduit intérieur (120) et le second conduit (28) est de façon générale concentrique au premier conduit (24).

3. Appareil de transfert de la chaleur selon la revendication 2, dans lequel lesdits conduits intérieur (120) et extérieur (126) dudit premier conduit isolé (24) comprennent de l'acier et que ladite barrière de diffusion d'hydrogène comprend un revêtement de diffusion en aluminium desdites surfaces intérieures (124, 122, 130, 128) et extérieures, formant un alliage fer-aluminium.

4. Appareil de transfert de la chaleur selon la revendication 2, dans lequel ladite barrière de diffusion d'hydrogène comprend un revêtement plaqué, choisi parmi le nickel et le cuivre.

5. Echangeur de chaleur allongé, comprenant un appareil de transfert de la chaleur selon l'une des revendications 1 à 4, conjointement avec un troisième conduit (32) entourant ledit second conduit (28) en étant espacé de lui et présentant une ouverture (34) à son extrémité inférieure, et un quatrième conduit (36) entourant ledit troisième conduit (32) en étant espacé de lui et présentant une extrémité inférieure (38) fermée et communiquant avec ledit troisième conduit (32), en étant espacé de lui.

6. Utilisation d'un échangeur de chaleur selon la revendication 5, pour un procédé de traitement de fluide qui comprend une réaction chimique continue.

FIG. I

FIG. 2